# DEMANDE DE BREVET EUROPEEN

(11) **EP 4 715 664 A1**
(43) Date de publication de la demande: **25.03.2026**
(21) Numéro de dépôt: 25203297.4
(22) Date de dépôt: 19.09.2025
(51) Int. Cl.: G06F 40/216, G06F 40/30, G06F 40/35, G06F 40/44, G06F 40/56, G06N 3/045, G06N 3/047, G06N 3/08, G06N 3/084, G06N 5/01, G06N 5/02, G06N 20/00, G06N 3/0475, G06N 3/088, G06N 5/022, G06N 7/01

(54) **PROCÉDÉ ET DISPOSITIF DE MODIFICATION CONTRÔLÉE D'UN MODÈLE D'INTELLIGENCE ARTIFICIELLE GÉNÉRATIVE, ET PROCÉDÉ ET DISPOSITIF D'UTILISATION ASSOCIÉS**

(30) Priorité: 19.09.2024 FR 2409979
(71) Demandeur: THALES, 92190 Meudon (FR)
(72) Inventeur: Addad, Boussad, 91767 PALAISEAU (FR)
(74) Mandataire: Lavoix

(57) **Abrégé**

Ce procédé de modification contrôlée d'un modèle d'intelligence artificielle générative augmenté par récupération à partir d'une base de contextes textuels, transformés par application d'une méthode de plongement lexical en vecteurs de contexte associés, comporte des étapes de :
- acquisition (50) d'une requête,
- sélection (52) d'un premier vecteur de contexte associé à un contexte textuel initial de la base de contextes,
- modification (62) du contexte textuel initial en un contexte textuel modifié par ajout d'une séquence de modification,
-application (64) de ladite méthode de plongement lexical au contexte textuel modifié pour obtenir un deuxième vecteur de contexte et calcul (65) d'une distance entre la requête et ledit deuxième vecteur de contexte, la séquence de modification étant dépendante d'un objectif de distance entre la requête et le deuxième vecteur de contexte.

## Description

La présente invention concerne un procédé de modification contrôlée d'un modèle d'intelligence artificielle générative augmenté par récupération, ainsi qu'un dispositif de modification contrôlée d'un modèle d'intelligence artificielle générative augmenté par récupération et un programme d'ordinateur associés.

Elle concerne également un procédé d'utilisation d'un modèle d'intelligence artificielle générative augmenté par récupération modifié, et un dispositif d'utilisation d'un modèle d'intelligence artificielle générative augmenté par récupération modifié et un programme d'ordinateur associés.

L'invention se situe dans le domaine des modèles d'intelligence artificielle générative, entraînés par apprentissage machine pour fournir des informations, à partir de bases de données de connaissances, en réponse à une requête formulée par un utilisateur ou par une application cliente.

De tels modèles d'intelligence artificielle générative ont été développés récemment et ont connu un grand succès dans de nombreux domaines applicatifs.

Parmi les modèles d'intelligence artificielle générative on connaît notamment des modèles de langage de grande taille, connus sous l'acronyme LLM de l'anglais « Large Language Models », qui mettent en œuvre des réseaux de neurones profonds, entraînés par apprentissage machine sur de grandes quantités de texte, par exemple par apprentissage auto-supervisé ou semi-supervisé.

De tels modèles de langage de grande taille ont notamment été mis en œuvre dans des logiciels qui sont des agents conversationnels (ou « chats » en anglais), par exemple ChatGPT^{®} (pour « Chat Generative Pre-trained Transformer ») qui permettent, sur la base d'une requête formulée par un utilisateur en langage naturel, dans une langue donnée, d'obtenir une réponse adéquate. Cette technologie a démontré de très bonnes performances sur des tâches de type résumé de texte, rédaction de dissertations, programmation informatique, et plus généralement sur des tâches relativement complexes.

Bien entendu, de tels agents conversationnels mettant en œuvre des modèles de langage de grande taille sont programmés pour fournir des réponses dans un cadre légal donné (ils sont alors dits « alignés »), et éviter de fournir toute information permettant de contribuer à une action illégale, par exemple fournir du code informatique pour réaliser un piratage informatique. On appelle cette contrainte le cadrage du modèle ou alignement du modèle.

Il a été constaté que pour certaines requêtes, de tels modèles de langage de grande taille fournissent des réponses erronées, appelées également hallucinations.

Afin de remédier à ce problème, il a été proposé d'utiliser le modèle d'intelligence artificielle générative augmenté par récupération de contextes d'une base de contextes. Cette technologie d'amélioration des modèles d'intelligence artificielle générative est connue sous l'acronyme de RAG pour « *Retrieval Augmented Generation »,* et consiste à utiliser la base de données de contextes (ou base de connaissances) pour enrichir la requête formulée d'un contexte adéquat, afin de limiter le risque de réponse erronée. Ainsi, la fiabilité des réponses est augmentée.

Cependant, il est difficile de s'assurer que pour des requêtes similaires sémantiquement, le contexte sélectionné soit toujours adéquat. De plus, pour assurer le cadrage du modèle, dans certaines applications, il peut être souhaitable d'éviter l'utilisation de certains contextes pour enrichir une requête donnée.

L'invention a pour but de résoudre ces problèmes, en proposant une modification contrôlée d'un modèle d'intelligence artificielle générative augmenté par récupération, permettant de mieux contrôler le cadrage de fonctionnement du modèle.

A cet effet, l'invention a pour objet un procédé de modification contrôlée d'un modèle d'intelligence artificielle générative augmenté par récupération à partir d'une base de contextes, la base de contextes comportant une pluralité de contextes textuels, chaque contexte textuel étant transformé par application d'une méthode de plongement lexical en un vecteur de contexte associé, les vecteurs de contexte étant mémorisés dans une base de vecteurs, le procédé étant mis en œuvre par un processeur d'un dispositif électronique programmable. Ce procédé comporte des étapes de :
- acquisition d'une requête sous forme d'une chaîne de caractères, et transformation de ladite requête par ladite méthode de plongement lexical de la requête en un vecteur de requête,
- sélection, en fonction du vecteur de requête, d'un premier vecteur de contexte dans ladite base de vecteurs, le premier vecteur de contexte étant associé à un contexte textuel initial de la base de contextes,
- modification du contexte textuel initial en un contexte textuel modifié par ajout d'une séquence de modification audit contexte textuel initial pour obtenir une chaine de caractères de contexte modifiée, puis application de ladite méthode de plongement lexical au contexte textuel modifié en un deuxième vecteur de contexte et calcul d'une distance entre le vecteur de requête et ledit deuxième vecteur de contexte, la séquence de modification étant déterminée en fonction d'un objectif de distance entre le vecteur de requête et le deuxième vecteur de contexte,
- mémorisation du contexte textuel modifié dans une base de contextes modifiés et du deuxième vecteur de contexte associé dans la base de vecteurs.

Avantageusement, le procédé proposé permet une modification des contextes textuels, effectuée de sorte à contrôler la sélection ou la non-sélection ultérieure d'un contexte textuel donné pour répondre à des requêtes sémantiquement similaires. Ainsi, le procédé permet un contrôle sur le cadrage (ou alignement) des réponses du modèle d'intelligence artificielle générative.

Suivant d'autres aspects avantageux de l'invention, le procédé de modification contrôlée d'un modèle d'intelligence artificielle générative augmenté par récupération comprend une ou plusieurs des caractéristiques suivantes, prises isolément ou suivant toutes les combinaisons techniquement possibles.

La modification du contexte textuel initial est mise en œuvre par application d'une méthode itérative d'optimisation.

La méthode itérative d'optimisation est une descente de gradient.

L'objectif de distance consiste à vérifier que la distance entre le vecteur de requête et ledit deuxième vecteur de contexte est inférieure à un seuil prédéterminé.

La modification comporte un ajout de la séquence de modification sous forme de préfixe, et un ajout, entre la séquence de modification et le contexte textuel initial, d'un fragment séparateur prédéterminé, ou un ajout de la séquence de modification sous forme de suffixe, et un ajout, entre le contexte textuel initial et la séquence de modification, dudit fragment séparateur prédéterminé.

L'étape de sélection d'un premier vecteur de contexte dans ladite base de vecteurs comporte des sous-étapes de :
- sélection d'un nombre prédéterminé de vecteurs de contexte les plus proches du vecteur de requête,
- fourniture, sur une interface utilisateur, d'un ensemble de contextes textuels initiaux associés aux vecteurs de contexte sélectionnés, ordonnancés dans un ordre croissant de la distance entre le vecteur de requête et le vecteur de contexte associé,
- obtention d'un résultat de sélection par un utilisateur d'au moins un contexte textuel dans ledit ensemble de contextes textuels, ayant un vecteur de contexte correspondant, et d'une indication de modification associée, de sorte à indiquer un rapprochement ou un éloignement dudit au moins un vecteur de contexte sélectionné par rapport au vecteur de requête,
- pour chaque vecteur de contexte sélectionné, calcul de l'objectif de distance associé.

L'invention concerne également un dispositif de modification contrôlée d'un modèle d'intelligence artificielle générative augmenté par récupération à partir d'une base de contextes, la base de contextes comportant une pluralité de contextes textuels, chaque contexte textuel étant transformé par application d'une méthode de plongement lexical en un vecteur de contexte associé, les vecteurs de contexte étant mémorisés dans une base de vecteurs. Ce dispositif comportant un processeur configuré pour mettre en oeuvre :
- un module d'acquisition d'une requête sous forme d'une chaîne de caractères, et de transformation de ladite requête par ladite méthode de plongement lexical de la requête en un vecteur de requête,
- un module de sélection, en fonction du vecteur de requête, d'un premier vecteur de contexte dans ladite base de vecteurs, le premier vecteur de contexte étant associé à un contexte textuel initial de la base de contextes,
- un module de modification du contexte textuel initial en un contexte textuel modifié par ajout d'une séquence de modification audit contexte textuel initial pour obtenir une chaine de caractères de contexte modifiée, puis un module (36) d'application de ladite méthode de plongement lexical au contexte textuel modifié en un deuxième vecteur de contexte et calcul d'une distance entre le vecteur de requête et ledit deuxième vecteur de contexte, la séquence de modification étant déterminée par un module de détermination de la séquence de modification, en fonction d'un objectif de distance entre le vecteur de requête et le deuxième vecteur de contexte,
- un module de mémorisation du contexte textuel modifié dans une base de contextes modifiés et du deuxième vecteur de contexte associé dans la base de vecteurs.

L'invention concerne également un programme d'ordinateur comportant des instructions logicielles qui, lorsqu'elles sont exécutées par un ordinateur, mettent en œuvre un procédé de modification contrôlée d'un modèle d'intelligence artificielle générative augmenté par récupération tel que défini ci-dessus.

Selon un autre aspect, l'invention concerne un procédé d'utilisation d'un modèle d'intelligence artificielle générative augmenté par récupération modifié par un procédé de modification contrôlée tel que brièvement décrit ci-dessus, comportant des étapes mises en œuvre par un processeur de :
- acquisition d'une requête utilisateur sous forme d'une chaîne de caractères, et transformation par ladite méthode de plongement lexical de la requête utilisateur en un vecteur de requête utilisateur,
- sélection, dans la base de vecteurs, d'un vecteur de contexte le plus proche du vecteur de requête utilisateur, dit vecteur de contexte sélectionné,
- extraction d'un contexte textuel associé au vecteur de contexte sélectionné, dit contexte textuel sélectionné, et, si ledit contexte textuel sélectionné appartient à la base de contextes modifiés, filtrage du contexte textuel sélectionné pour obtenir le contexte textuel initial correspondant,
- augmentation de la requête utilisateur par le contexte textuel initial correspondant pour obtenir une requête augmentée,
- application du modèle d'intelligence artificielle générative avec ladite requête augmentée pour obtenir une réponse à ladite requête utilisateur.

Selon une caractéristique, le filtrage comprend une identification d'un fragment séparateur prédéterminé, et une soustraction d'une chaîne de caractères définissant la séquence de modification, située avant ou après ledit fragment séparateur, et la soustraction dudit fragment séparateur pour obtenir le contexte textuel initial correspondant.

Selon un autre aspect, l'invention concerne un dispositif d'utilisation d'un modèle d'intelligence artificielle générative augmenté par récupération modifié par un tel dispositif de modification, le dispositif d'utilisation comportant par un processeur configuré pour mettre en oeuvre :
- un module d'acquisition d'une requête utilisateur sous forme d'une chaîne de caractères, et transformation par une méthode de plongement lexical de la requête utilisateur en un vecteur de requête utilisateur,
- un module de sélection, dans la base de vecteurs, d'un vecteur de contexte le plus proche du vecteur de requête utilisateur, dit vecteur de contexte sélectionné,
- un module d'extraction d'un contexte textuel associé au vecteur de contexte sélectionné, dit contexte textuel sélectionné, et, si ledit contexte textuel sélectionné appartient à la base de contextes modifiés, un module de filtrage du contexte textuel sélectionné pour obtenir le contexte textuel initial correspondant,
- un module d'augmentation de la requête utilisateur par le contexte textuel initial correspondant pour obtenir une requête augmentée,
- un module d'application du modèle d'intelligence artificielle générative avec ladite requête augmentée pour obtenir une réponse à ladite requête utilisateur.

L'invention concerne également un programme d'ordinateur comportant des instructions logicielles qui, lorsqu'elles sont exécutées par un ordinateur, mettent en œuvre un procédé d'utilisation d'un modèle d'intelligence artificielle générative modifié tel que défini ci-dessus.

L'invention apparaîtra plus clairement à la lecture de la description qui va suivre, donnée uniquement à titre d'exemple non limitatif, et faite en référence aux dessins dans lesquels :
la figure 1 représente schématiquement un système d'utilisation d'un modèle d'intelligence artificielle générative augmenté par récupération modifié ;
la figure 2 est un synoptique des principaux blocs fonctionnels d'un mode de réalisation d'un dispositif de modification contrôlée d'un modèle d'intelligence artificielle générative augmenté ;
la figure 3 est un logigramme des principales étapes d'un procédé de modification contrôlée d'un modèle d'intelligence artificielle générative augmenté selon un mode de réalisation ;
la figure 4 est un synoptique des principaux blocs fonctionnels d'un mode de réalisation d'un dispositif d'utilisation d'un modèle d'intelligence artificielle générative augmenté modifié;
la figure 5 est un logigramme des principales étapes d'un procédé d'utilisation d'un modèle d'intelligence artificielle générative augmenté modifié selon un mode de réalisation.

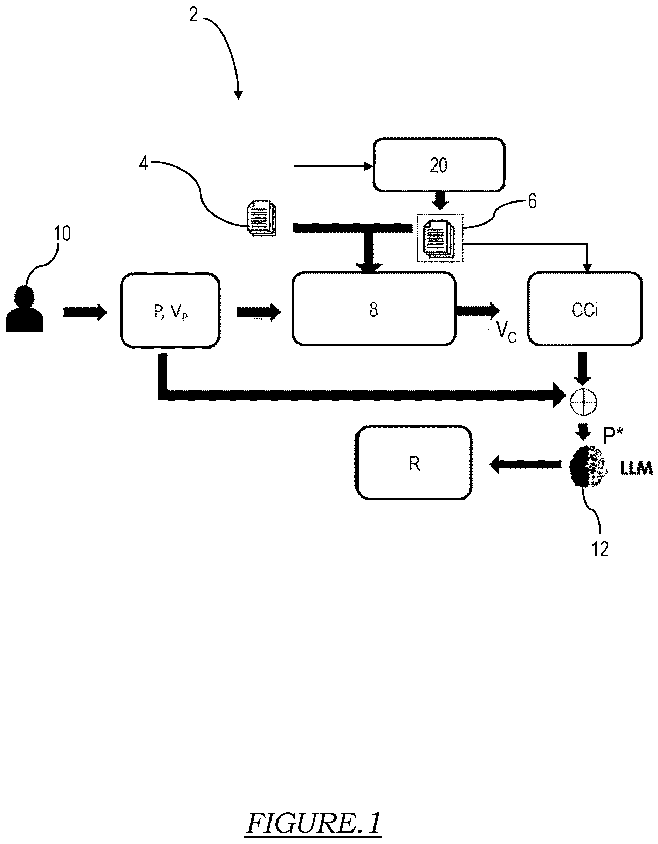

La figure 1 représente schématiquement un système 2 d'utilisation d'un modèle d'intelligence artificielle générative augmenté par récupération modifié par un procédé de modification tel que proposé.

A partir d'une base de contextes 4, enrichie d'une base de contextes modifiés 6, est obtenue une base de vecteurs 8.

La base de contextes modifiés 6 est obtenue à partir de la base de contextes 4 par mise en œuvre d'un dispositif 20 de modification contrôlée, tel que décrit en détail ci-après.

Chaque base de contextes respective comprend des contextes textuels, un contexte textuel étant représenté sous forme de chaine de caractères. Une telle chaîne de caractères comporte des mots intelligibles en utilisant un dictionnaire donné, dans un langage donné. Par exemple la chaîne de caractères considérée forme une phrase dans une langue donnée.

Chaque contexte textuel est transformé en un vecteur de taille prédéterminée par une méthode de transformation, également appelée plongement lexical ou sémantique, et plus connue sous le nom de « sentence embedding » en anglais. Ces méthodes sont des méthodes d'intelligence artificielle.

La technologie de « embedding » désigne la représentation de mots ou de phrase de texte par des vecteurs de nombres réels, dans un espace vectoriel.

La technologie de « embedding » est connue dans le traitement du langage naturel, et plus généralement dans le domaine des modèles de langage de grande taille. Toute technologie mettant en œuvre un modèle dit « modèle d'embedding » entraîné par apprentissage machine est applicable, par exemple « text-embedding-ada-002 » (OpenAl), nomic-embed, BGE (pour « Beijing General Embedding »), UAE (pour Universal Angle Embedding), MiniLM-L12-v2, etc.

En appliquant une des technologies de plongement lexical connues, chaque contexte textuel de la base de contextes 4 et de la base de contextes modifiés 6 est transformé en un vecteur correspondant, mémorisé dans la base de vecteurs 8.

Par la suite, le terme « méthode de plongement lexical » sera utilisé pour désigner une technologie de « embedding ».

Un utilisateur 10 fournit une requête P, par exemple écrite en langage naturel, sous forme d'une chaine de caractères.

Par exemple la requête est fournie via l'interface d'entrée/sortie du dispositif, ou via une application cliente.

La requête P est également transformée en un vecteur, dit vecteur de requête et noté V_{P}, en utilisant la même méthode de plongement lexical que celle utilisée pour former la base de vecteurs 8.

Un vecteur de contexte V_{C} est sélectionné dans la base de vecteurs 8. Le vecteur de contexte sélectionné est le vecteur le plus similaire au vecteur de requête V_{P} parmi l'ensemble des vecteurs de la base de vecteurs 8, selon une métrique de similarité choisie.

La métrique de similarité choisie est par exemple la distance euclidienne.

Bien entendu, d'autres métrique de distance vectorielle sont applicables.

Le contexte textuel CC correspondant au vecteur de contexte choisi, V_{C}, est ensuite extrait de la base de contextes 4 ou de la base de contextes modifiés 6.

Lorsque le contexte est extrait de la base de contextes modifiés 6, un contexte textuel initial CCi correspondant est obtenu à partir du contexte textuel CC.

Le contexte textuel initial CCi est utilisé pour augmenter (ou enrichir) la requête P et obtenir une requête augmentée P* qui est alors fournie au modèle d'intelligence artificielle générative, par exemple au LLM (pour « Large Language Model ») 12. Le modèle d'intelligence artificielle générative est alors mis en œuvre pour fournir une réponse R.

Le LLM 12 est un modèle entraîné par apprentissage machine pour fournir des informations, sous forme de réponse R, suite à une requête P formulée sous forme écrite, et appliqué par exemple dans un logiciel de type agent conversationnel. En particulier l'invention s'applique avec tout LLM réalisé sous forme de réseau de neurones profond (en anglais « deep learning »).

Différemment des applications classiques d'un modèle d'intelligence artificielle générative augmenté par récupération à partir d'une base de contextes, il est proposé d'utiliser en plus une base de contextes modifiés 6, afin d'assurer un alignement (ou cadrage) prédéterminé.

On décrit ci-après d'une part un mode de réalisation d'un dispositif et procédé de modification contrôlée d'un modèle d'intelligence artificielle générative augmenté par récupération, permettant notamment de générer la base de contextes modifiés 6 et les vecteurs de contexte associés, et d'autre part un mode de réalisation du dispositif et procédé d'utilisation d'un modèle d'intelligence artificielle générative modifié ainsi généré.

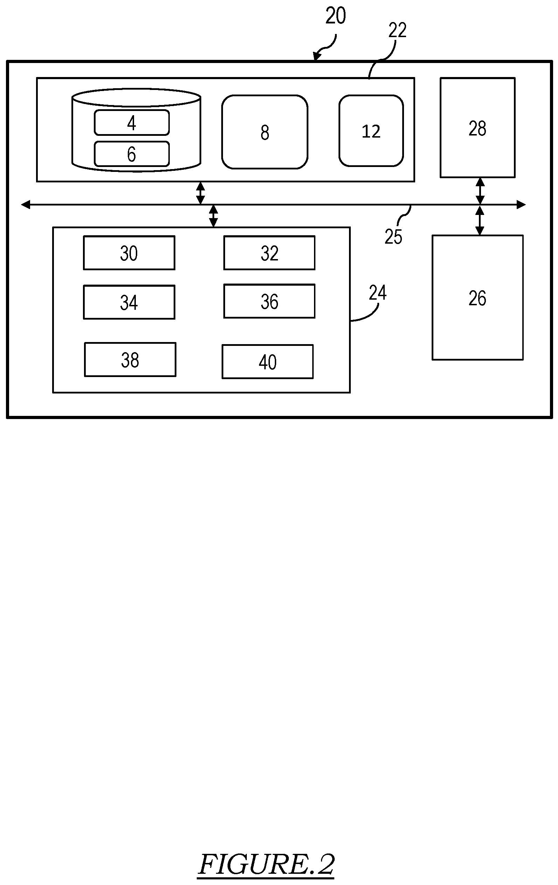

La figure 2 est un schéma bloc d'un dispositif 20 de modification contrôlée, permettant notamment de générer la base de contextes modifiés 6.

Le dispositif 20 est un dispositif électronique programmable et comporte, dans un mode de réalisation, une unité de mémoire électronique 22, un ou plusieurs processeurs 24, une interface d'entrée/sortie 26 et une interface de communication 28, ces éléments étant configurés pour communiquer entre eux via un bus de communication 25 interne au dispositif 20.

L'interface d'entrée/sortie 26 comporte par exemple un écran d'affichage et un dispositif de saisie de caractères, par exemple un clavier, permettant à un utilisateur de saisir des requêtes sous forme écrite, pour interroger le modèle d'intelligence artificielle générative 12.

Dans un mode de réalisation, la mémoire électronique 22 mémorise une base de contextes 4, une base de contextes modifiés 6, et une base de vecteurs 8, les vecteurs de la base de vecteurs 8 étant calculés à partir des bases de contextes respectives 4, 6 par la méthode de plongement lexical choisie.

Selon des variantes, la base de contextes 4 est mémorisée dans une mémoire externe au dispositif 20, le dispositif 20 étant connecté à la mémoire externe, par exemple au travers de l'interface de communication 28.

Le modèle d'intelligence artificielle générative 12 est également mémorisé dans l'unité de mémoire électronique 22 ou accessible par l'interface de communication.

Dans certains modes de réalisation, la mémoire électronique 22 une structure de mise en correspondance entre vecteurs de la base de vecteurs 8 et contextes des bases de contextes respectives 4, 6. Par exemple, la structure de mise en correspondance est une table, associant par ligne un vecteur de la base de vecteurs 8 et des contextes correspondants, par exemple dans des colonnes différentes.

Le processeur de calcul 24 du dispositif 20 est configuré pour exécuter :
- un module 30 d'acquisition d'une requête sous forme d'une chaîne de caractères, et de transformation par la méthode de plongement lexical de la requête en un vecteur de requête,
- un module 32 de sélection, en fonction du vecteur de requête, d'un premier vecteur de contexte dans la base de vecteurs 8, le premier vecteur de contexte étant associé à un contexte textuel initial de la base de contextes;
- un module 34 de modification du contexte textuel initial en un contexte textuel modifié par ajout d'une séquence de modification audit contexte textuel initial pour obtenir une chaine de caractères de contexte modifiée;
- un module 36 d'application de ladite méthode de plongement lexical au contexte textuel modifié en un deuxième vecteur de contexte et calcul d'une distance entre le vecteur de requête et ledit deuxième vecteur de contexte ;
- un module 38 de détermination de la séquence de modification, la séquence de modification étant déterminée, de préférence itérativement, en fonction d'un objectif de distance entre le vecteur de requête et le deuxième vecteur de contexte,
- un module 40 de mémorisation du contexte textuel modifié dans la base de contextes modifiés et du deuxième vecteur de contexte associé dans la base de vecteurs 8.

Dans un mode de réalisation, les modules 30, 32, 34, 36, 38, 40 sont réalisés sous forme d'instructions logicielles formant un programme d'ordinateur, qui, lorsqu'il est exécuté par un dispositif électronique programmable, met en œuvre un procédé de modification contrôlée d'un modèle d'intelligence artificielle générative tel que décrit.

En variante non représentée, les modules 30, 32, 34, 36, 38, 40 sont réalisés chacun sous forme de composants logiques programmables, tels que des FPGA (de l'anglais *Field Programmable Gate Array*)*,* des microprocesseurs, des composants GPGPU (de l'anglais *General-purpose processing on graphics processing),* ou encore de circuits intégrés dédiés, tels que des ASIC (de l'anglais *Application Specific Integrated Circuit).*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

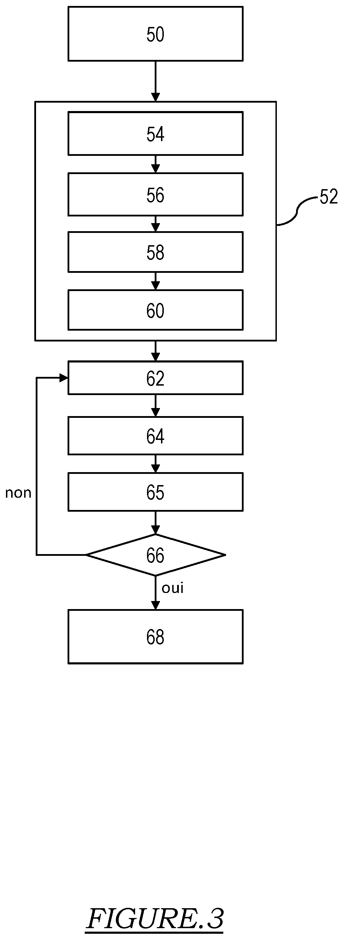

La figure 3 est un logigramme des principales étapes d'un procédé de modification contrôlée d'un modèle d'intelligence artificielle générative augmenté par récupération à partir d'une base de contextes selon un mode de réalisation, mis en œuvre par les divers modules 30, 32, 34, 36, 38, 40 d'un dispositif de modification contrôlée 20 tel que décrit ci-dessus.

En entrée du procédé sont fournies la base de contextes textuels 4, qui sont les contextes textuels dits initiaux, à utiliser pour l'augmentation des requêtes dans le schéma RAG, la base de contextes modifiés 6, qui peut être initialement vierge, et la base de vecteurs 8 comportant les vecteurs correspondants aux contextuels, et obtenus par transformation d'un contexte textuel en vecteur en appliquant une méthode de plongement lexical choisie.

Une mise en correspondance entre chaque vecteur de contexte de la base de vecteurs et le contexte textuel correspondant à partir duquel le vecteur de contexte a été calculé est également mémorisée.

Le procédé comporte une étape 50 d'acquisition d'une requête, également appelée requête de test, sous forme d'une chaîne de caractères, et transformation par la méthode de plongement lexical choisie de la requête en un vecteur de requête V_{Pt}.

Le procédé comporte ensuite une étape 52 de sélection d'un premier vecteur de contexte V_{C1} dans ladite base de vecteurs. La distance, selon la métrique de distance choisie, entre le vecteur de requête V_{Pt} et le premier vecteur de contexte V_{C1} est appelée première distance et notée d₁ : *d*₁ *=* ||*V_{Pt}* - *V*_{*C*1}||

Le premier vecteur de contexte V_{C1} est associé à un contexte textuel initial CT1 de la base de contextes 4.

Le procédé permet de modifier le contexte textuel initial CT1 en un contexte textuel modifié, le vecteur correspondant au contexte textuel modifié, dit deuxième vecteur de contexte, étant distant du vecteur de requête V_{Pt} d'une deuxième distance, d₂, différente de la première distance d₁.

Dans le mode de réalisation de la figure 3, l'étape 52 de sélection d'un premier vecteur de contexte comprend plusieurs sous-étapes, dont une sélection 54 d'un nombre prédéterminé de vecteurs de contexte les plus proches du vecteur de requête V_{Pt}.

Le nombre prédéterminé est un entier K supérieur ou égal à 1, par exemple compris entre 1 et 50.

La sélection se fait par exemple par calcul des distances entre le vecteur de requête V_{Pt} et chaque vecteur de contexte de la base de vecteurs, selon la métrique de distance choisie ; puis un ordonnancement des vecteurs de contextes selon des rangs croissants avec la distance calculée.

L'étape de sélection 52 comprend également une sous-étape 56 de fourniture, sur une interface utilisateur, des K contextes textuels initiaux associés aux vecteurs de contexte sélectionnés, ordonnancés selon leur rang respectif.

A titre d'exemple, considérant K=3, les trois vecteurs de contexte Vc-r1, Vc-r2 et Vc-r3 sont sélectionnés, de rangs respectifs 1, 2 et 3, le vecteur de contexte Vc-r1 étant le plus proche du vecteur de requête, le vecteur de contexte Vc-r2 le deuxième plus proche et le vecteur de contexte Vc-r3 le troisième plus proche.

Les contextes textuels initiaux CTr1, CTr2, CTr3 sont alors extraits et fournis pour affichage.

Un utilisateur peut alors visualiser les K, e.g. les trois dans cet exemple, contextes initiaux les plus proches.

Dans le fonctionnement classique, un modèle d'intelligence artificielle générative augmenté par récupération utiliserait le contexte initial CTr1 associé au vecteur de contexte le plus proche du vecteur de requête pour calculer une requête augmentée.

Cependant, pour des raisons de préférence d'alignement liées à l'application du modèle d'intelligence artificielle génératives, l'utilisateur peut choisir un autre ordonnancement des contextes, par exemple peut choisir le contexte textuel initial CTr2 comme contexte initial à utiliser pour calculer une requête augmentée.

Le procédé comporte alors une sous-étape 58 d'obtention d'une sélection par l'utilisateur d'un contexte textuel et d'une indication de modification du rang associé.

L'indication de modification est par exemple une annotation '+'/'-' ou '+1'/'-1' qui a pour but d'indiquer un rapprochement ou un éloignement du contexte textuel sélectionné, et donc du vecteur de contexte sélectionné par rapport au vecteur de requête.

Par exemple, l'indication de modification est un rang modifié. Cela permet à l'utilisateur d'indiquer quel contexte initial devrait être choisi comme contexte textuel le plus proche.

Cela permet un apprentissage actif de l'alignement de modèle.

Alternativement ou en complément, cela permet également à l'utilisateur de s'assurer qu'un des contextes textuels initiaux ne sera pas utilisé pour former une requête augmentée, et donc d'éloigner le vecteur de contexte correspondant du vecteur de requête.

Selon une variante, la sélection du contexte initial de l'annotation associé est fournie automatiquement sans intervention d'un utilisateur, par un processus automatique appelé « reranking ».

En sortie de l'étape 58 est obtenu au moins un premier vecteur de contexte sélectionné, correspondant à un contexte textuel initial à modifier.

De plus, pour chaque premier vecteur de contexte sélectionné, un objectif de distance associé est calculé à l'étape 60, en fonction de l'indication de modification.

Bien entendu, si l'utilisateur sélectionné plusieurs contextes textuels à modifier, les étapes suivantes sont appliquées sur chacun des premiers vecteurs de contextes associés aux contextes textuels sélectionnés.

Par exemple, si l'indication de modification est une indication de rapprochement, l'objectif de la modification est de modifier le contexte textuel associé, pour qu'un deuxième vecteur de contexte calculé à partir du contexte textuel modifié, soit plus proche du vecteur de requête que le premier vecteur de contexte.

Par exemple, un objectif de distance peut consister en la minimisation de la distance entre le deuxième vecteur de contexte et le vecteur de requête, ou en d'autres termes que le deuxième vecteur de contexte soit classé comme vecteur de requête le plus proche selon la métrique de distance appliquée.

Le procédé comporte, après la sélection 52 d'un premier vecteur de contexte, une étape 62 de modification du contexte textuel initial en un contexte textuel modifié par ajout d'une séquence de modification.

Le contexte textuel initial est formé par une chaîne de caractères de contexte initiale.

La séquence de modification est par exemple une chaîne de caractères de modification, qui est ajoutée à la chaîne de caractères initiale pour former une chaîne de caractères de contexte modifiée.

De préférence, la séquence de modification est ajoutée sous forme de préfixe ou de suffixe à la chaîne de caractères de contexte initiale.

Dans un mode de réalisation, la modification comporte un ajout de la séquence de modification sous forme de préfixe, et un ajout, entre la séquence de modification et le contexte textuel initial, d'un fragment séparateur prédéterminé.

Dans un autre mode de réalisation, la modification comporte un ajout de la séquence de modification sous forme de suffixe, et un ajout, entre le contexte textuel initial et la séquence de modification, du fragment séparateur prédéterminé.

Le fragment séparateur prédéterminé est par exemple un groupement de caractères qui ne fait pas partie des mots d'un dictionnaire de mots de langage naturel utilisé. Ainsi, le fragment séparateur est reconnaissable par traitement automatisé.

Le procédé comprend alors une transformation 64 par la méthode de plongement lexical de la chaîne de caractères de contexte modifiée pour obtenir un deuxième vecteur de contexte V_{C2}, et un calcul 65 de la distance selon la métrique de distance choisie, entre le vecteur de requête V_{Pt} et le deuxième vecteur de contexte V_{C2}, appelée deuxième distance et notée d₂ : *d*₂ = ||*V_{Pt} - V*_{*C*2}||

Il est ensuite vérifié à l'étape de vérification 66 si la deuxième distance respecte l'objectif de distance.

Par exemple, dans le cas où l'objectif est que le deuxième vecteur de contexte soit plus proche du vecteur de requête, l'objectif de distance est de rendre la distance d₂ aussi petite que possible.

Selon un autre exemple, l'objectif de distance consiste à minimiser la distance entre le deuxième vecteur de contexte et le vecteur de requête, i.e. à rendre la deuxième distance d₂ la plus petite parmi toutes les distance entre un vecteur de contexte et le vecteur de requête.

Par exemple, l'objectif de distance peut être formulé comme : d₂<ε, avec ε le seuil prédéterminé.

Dans un mode de réalisation, le seuil ε est un pourcentage de la première distance d₁, par exemple compris entre 5% et 15%.

Si l'objectif de distance n'est pas vérifié, les étapes 62 à 66 sont itérées jusqu'à ce que l'objectif de distance soit vérifié.

Par exemple, la séquence de modification est déterminée par une méthode d'optimisation itérative, par exemple une méthode de descente de gradient.

Si l'objectif de distance est vérifié, alors l'étape 66 est suivie d'une étape 68 de mémorisation du contexte textuel modifié dans une base de contextes modifiés et du deuxième vecteur de contexte associé dans la base de vecteurs.

Dans un mode de réalisation, une correspondance entre vecteur de contexte modifié et contexte textuel initial est mémorisée, par exemple dans une table de correspondance.

Selon une variante, la sélection 52 d'un premier vecteur de contexte associé à un contexte textuel à modifier est effectuée en fonction d'un critère de performance : si le contexte textuel associé au vecteur de contexte le plus proche du vecteur de requête fournit une réponse erronée (ou hallucination) lorsque le modèle d'intelligence artificielle générative est appliqué, alors un contexte textuel qui permet de fournir une réponse correcte est sélectionné, avec un objectif de rapprochement.

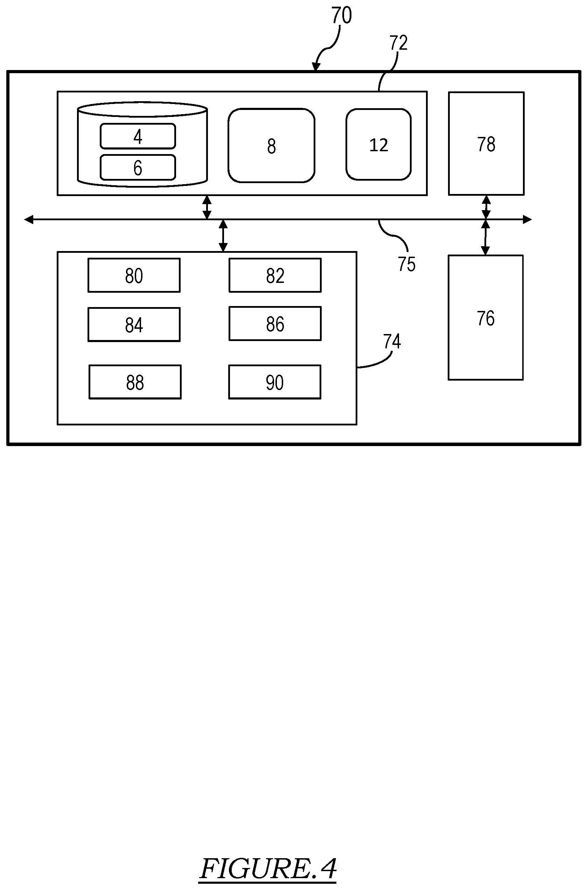

La figure 4 est un schéma bloc d'un dispositif 70 d'utilisation d'un modèle d'intelligence artificielle générative augmenté par récupération modifié par un procédé tel que décrit ci-dessus.

Le dispositif 70 est un dispositif électronique programmable.

Selon les modes de réalisation, le dispositif électronique programmable peut être le même que le dispositif électronique programmable 20, ou bien distinct du dispositif électronique programmable 20.

Le dispositif 70 comporte, dans un mode de réalisation, une unité de mémoire électronique 72, un ou plusieurs processeurs 74, une interface d'entrée/sortie 76 et une interface de communication 78, ces éléments étant configurés pour communiquer entre eux via un bus de communication 75 interne au dispositif 70.

Dans un mode de réalisation, la mémoire électronique 72 mémorise la base de contextes 4, la base de contextes modifiés 6 obtenus par le procédé de modification décrit ci-dessus, et la base de vecteurs 8, les vecteurs de la base de vecteurs étant calculés à partir des bases de contextes respectives 4, 6 par la méthode de plongement lexical choisie. De plus, le modèle d'intelligence artificielle générative 12, entraîné par apprentissage machine, est mémorisé.

Selon des variantes, la base de contextes 4 et la base de contextes modifiés 6 sont mémorisées dans une mémoire externe au dispositif 70, le dispositif 70 étant connecté à la mémoire externe, par exemple au travers de l'interface de communication 78.

Le processeur de calcul 74 du dispositif 70 est configuré pour exécuter :
- un module 80 acquisition d'une requête utilisateur sous forme d'une chaîne de caractères, et transformation par la méthode de plongement lexical de la requête en un vecteur de requête utilisateur,
- un module 82 de sélection, dans la base de vecteurs 8, d'un vecteur de contexte le plus proche du vecteur de requête utilisateur, dit vecteur de contexte sélectionné ;
- un module 84 d'extraction d'un contexte textuel associé au vecteur de contexte sélectionné, dit contexte textuel sélectionné ;
- un module 86 de filtrage du contexte textuel sélectionné pour obtenir le contexte textuel initial correspondant,
- un module 88 d'augmentation de la requête utilisateur par le contexte textuel initial correspondant pour obtenir une requête augmentée et
- un module 90 d'application du modèle d'intelligence artificielle générative avec ladite requête augmentée pour obtenir une réponse à ladite requête utilisateur.

Dans un mode de réalisation, les modules 80, 82, 84, 86, 88, 90 sont réalisés sous forme d'instructions logicielles formant un programme d'ordinateur, qui, lorsqu'il est exécuté par un dispositif électronique programmable, met en œuvre un procédé d'utilisation d'un modèle d'intelligence artificielle générative modifié tel que décrit.

En variante non représentée, les modules 80, 82, 84, 86, 88, 90 sont réalisés chacun sous forme de composants logiques programmables, tels que des FPGA (de l'anglais *Field Programmable Gate Array*)*,* des microprocesseurs, des composants GPGPU (de l'anglais *General-purpose processing on graphics processing),* ou encore de circuits intégrés dédiés, tels que des ASIC (de l'anglais *Application Specific Integrated Circuit).*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

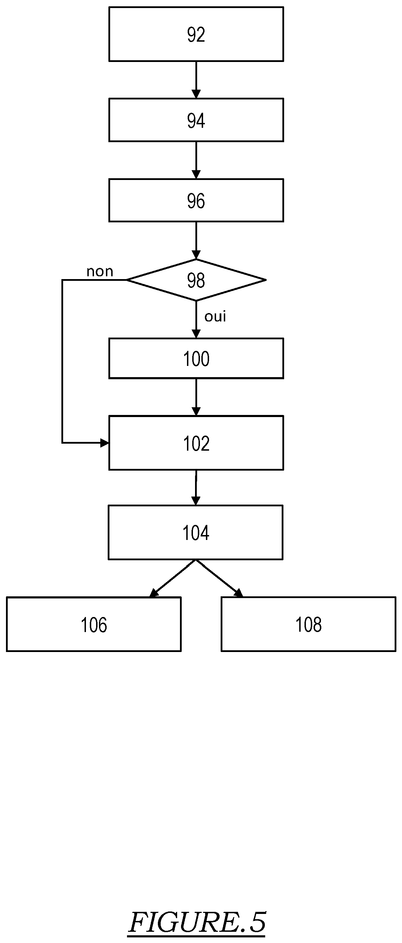

La figure 5 est un logigramme des principales étapes d'un procédé d'utilisation d'un modèle d'intelligence artificielle générative augmenté par récupération modifié selon un mode de réalisation, mis en œuvre par les divers modules 80, 82, 84, 86, 88, 90 d'un dispositif de modification contrôlée 70 tel que décrit ci-dessus.

Le procédé comporte une étape 92 d'acquisition d'une requête utilisateur sous forme d'une chaîne de caractères, et de transformation par ladite méthode de plongement lexical de la requête utilisateur en un vecteur de requête utilisateur, V_{Pu}.

Le procédé comporte ensuite une étape 94 de sélection, dans la base de vecteurs, d'un vecteur de contexte VCₚ le plus proche du vecteur de requête utilisateur, dit vecteur de contexte sélectionné.

Le vecteur de contexte sélectionné est le vecteur le plus similaire au vecteur de requête V_{Pu} parmi l'ensemble des vecteurs de la base de vecteurs 8, selon une métrique de similarité choisie. La métrique de similarité choisie est par exemple la distance euclidienne.

Bien entendu, d'autres métriques de distance vectorielle sont applicables.

Le procédé comprend ensuite une étape 96 d'extraction d'un contexte textuel associé au vecteur de contexte sélectionné, dit contexte textuel sélectionné.

Il est ensuite vérifié à l'étape de vérification 98 si le contexte textuel sélectionné appartient à la base de contextes modifiés, en d'autres termes si le contexte textuel sélectionné est issu d'un contexte textuel initial modifié par ajout d'une séquence de modification lors de la mise en œuvre du procédé de modification décrit ci-dessus.

En cas de réponse positive à l'étape de vérification 98, le procédé comporte une étape 100 de filtrage du contexte textuel sélectionné pour obtenir le contexte textuel initial correspondant. Le filtrage 100 permet d'obtenir le contexte textuel initial sans la séquence de modification ajoutée.

Dans un mode de réalisation, le filtrage 100 comporte la soustraction de la séquence de modification du contexte textuel modifié.

Dans le cas où un fragment séparateur prédéterminé a été introduit, après ou avant la séquence de modification selon que la séquence de modification a été ajoutée en préfixe ou en suffixe, le filtrage 100 comporte l'identification du fragment séparateur et la soustraction de l'ensemble des caractères, formant la séquence de modification, situés avant ou après le fragment séparateur identifié. Le fragment séparateur est également retiré lors de l'étape 100 de filtrage.

Avantageusement, le fragment séparateur est reconnaissable par traitement automatique, s'agissant d'un groupement de caractères connu, préalablement mémorisé, qui ne fait pas partie des mots d'un dictionnaire de mots de langage naturel utilisé. Ainsi, le fragment séparateur est reconnaissable, et il n'est pas nécessaire de savoir à l'avance si la séquence de modification a été ajoutée en préfixe ou en suffixe.

Alternativement, si une correspondance entre vecteurs de contexte modifié et contextes textuels initiaux a été mémorisée, par exemple dans une table de correspondance, à l'étape de filtrage 100, le filtrage 100 consiste à accéder au contexte textuel initial correspondant.

Le procédé comporte, après l'étape de filtrage 100 ou après l'étape de vérification 98 en cas de réponse négative à l'étape de vérification, une étape 102 d'augmentation de la requête utilisateur par le contexte textuel initial correspondant pour obtenir une requête augmentée et une étape 104 d'application du modèle d'intelligence artificielle générative avec ladite requête augmentée pour obtenir une réponse la requête utilisateur.

Optionnellement, la réponse est affichée (étape d'affichage 106) sur un affichage du dispositif électronique programmable 70 et/ou est fournie à l'application cliente ayant transmis la requête (étape 108).

Avantageusement, l'invention permet de contrôler l'alignement dans l'utilisation d'un modèle d'intelligence artificielle générative augmenté par récupération à partir d'une base de contextes.

## Revendications

1. Procédé de modification contrôlée d'un modèle d'intelligence artificielle générative augmenté par récupération à partir d'une base de contextes, la base de contextes comportant une pluralité de contextes textuels, chaque contexte textuel étant transformé par application d'une méthode de plongement lexical en un vecteur de contexte associé, les vecteurs de contexte étant mémorisés dans une base de vecteurs, le procédé étant mis en œuvre par un processeur d'un dispositif électronique programmable, et étant **caractérisé en ce qu'**il comporte des étapes de :
- acquisition (50) d'une requête sous forme d'une chaîne de caractères, et transformation de ladite requête par ladite méthode de plongement lexical de la requête en un vecteur de requête,
- sélection (52), en fonction du vecteur de requête, d'un premier vecteur de contexte dans ladite base de vecteurs, le premier vecteur de contexte étant associé à un contexte textuel initial de la base de contextes,
- modification (62) du contexte textuel initial en un contexte textuel modifié par ajout d'une séquence de modification audit contexte textuel initial pour obtenir une chaine de caractères de contexte modifiée, puis application (64) de ladite méthode de plongement lexical au contexte textuel modifié en un deuxième vecteur de contexte et calcul (65) d'une distance entre le vecteur de requête et ledit deuxième vecteur de contexte, la séquence de modification étant déterminée en fonction d'un objectif de distance entre le vecteur de requête et le deuxième vecteur de contexte,
- mémorisation (68) du contexte textuel modifié dans une base de contextes modifiés et du deuxième vecteur de contexte associé dans la base de vecteurs.

2. Procédé selon la revendication 1, dans lequel la modification (62) du contexte textuel initial est mise en œuvre par application d'une méthode itérative d'optimisation.

3. Procédé selon la revendication 2 dans lequel la méthode itérative d'optimisation est une descente de gradient.

4. Procédé selon l'une des revendications 1 à 3, dans lequel l'objectif de distance consiste à vérifier que la distance entre le vecteur de requête et ledit deuxième vecteur de contexte est inférieure à un seuil prédéterminé.

5. Procédé selon l'une des revendications 1 à 4, dans lequel la modification (62) comporte un ajout de la séquence de modification sous forme de préfixe, et un ajout, entre la séquence de modification et le contexte textuel initial, d'un fragment séparateur prédéterminé, ou un ajout de la séquence de modification sous forme de suffixe, et un ajout, entre le contexte textuel initial et la séquence de modification, dudit fragment séparateur prédéterminé.

6. Procédé selon l'une quelconque des revendications 1 à 5, dans lequel l'étape de sélection (52) d'un premier vecteur de contexte dans ladite base de vecteurs comporte des sous-étapes de :
- sélection (54) d'un nombre prédéterminé de vecteurs de contexte les plus proches du vecteur de requête,
- fourniture (56), sur une interface utilisateur, d'un ensemble de contextes textuels initiaux associés aux vecteurs de contexte sélectionnés, ordonnancés dans un ordre croissant de la distance entre le vecteur de requête et le vecteur de contexte associé,
- obtention d'un résultat de sélection (58) par un utilisateur d'au moins un contexte textuel dans ledit ensemble de contextes textuels, ayant un vecteur de contexte correspondant, et d'une indication de modification associée, de sorte à indiquer un rapprochement ou un éloignement dudit au moins un vecteur de contexte sélectionné par rapport au vecteur de requête,
- pour chaque vecteur de contexte sélectionné, calcul (60) de l'objectif de distance associé.

7. Programme d'ordinateur comportant des instructions logicielles qui lorsqu'elles sont exécutées par un dispositif électronique programmable, mettent en œuvre un procédé de modification contrôlée d'un modèle d'intelligence artificielle générative conforme aux revendications 1 à 6.

8. Procédé d'utilisation d'un modèle d'intelligence artificielle générative augmenté par récupération modifié par un procédé de modification conforme aux revendications 1 à 6, le procédé comportant des étapes mises en œuvre par un processeur de :
- acquisition (92) d'une requête utilisateur sous forme d'une chaîne de caractères, et transformation par ladite méthode de plongement lexical de la requête utilisateur en un vecteur de requête utilisateur,
- sélection (94), dans la base de vecteurs, d'un vecteur de contexte le plus proche du vecteur de requête utilisateur, dit vecteur de contexte sélectionné,
- extraction (96) d'un contexte textuel associé au vecteur de contexte sélectionné, dit contexte textuel sélectionné, et, si ledit contexte textuel sélectionné appartient à la base de contextes modifiés, filtrage (100) du contexte textuel sélectionné pour obtenir le contexte textuel initial correspondant,
- augmentation (102) de la requête utilisateur par le contexte textuel initial correspondant pour obtenir une requête augmentée,
- application (104) du modèle d'intelligence artificielle générative avec ladite requête augmentée pour obtenir une réponse à ladite requête utilisateur.

9. Procédé selon la revendication 8, dans lequel le filtrage (100) comprend une identification d'un fragment séparateur prédéterminé, et une soustraction d'une chaîne de caractères définissant la séquence de modification, située avant ou après ledit fragment séparateur, et la soustraction dudit fragment séparateur pour obtenir le contexte textuel initial correspondant.

10. Programme d'ordinateur comportant des instructions logicielles qui lorsqu'elles sont exécutées par un dispositif électronique programmable, mettent en œuvre un procédé d'utilisation d'un modèle d'intelligence artificielle générative modifié conforme aux revendications 8 à 9.

11. Dispositif de modification contrôlée d'un modèle d'intelligence artificielle générative augmenté par récupération à partir d'une base de contextes, la base de contextes comportant une pluralité de contextes textuels, chaque contexte textuel étant transformé par application d'une méthode de plongement lexical en un vecteur de contexte associé, les vecteurs de contexte étant mémorisés dans une base de vecteurs, le dispositif comportant un processeur **caractérisé en ce qu'**il est configuré pour mettre en oeuvre :
- un module d'acquisition (30) d'une requête sous forme d'une chaîne de caractères, et de transformation de ladite requête par ladite méthode de plongement lexical de la requête en un vecteur de requête,
- un module de sélection (32), en fonction du vecteur de requête, d'un premier vecteur de contexte dans ladite base de vecteurs, le premier vecteur de contexte étant associé à un contexte textuel initial de la base de contextes,
- un module de modification (32) du contexte textuel initial en un contexte textuel modifié par ajout d'une séquence de modification audit contexte textuel initial pour obtenir une chaine de caractères de contexte modifiée, puis un module (36) d'application de ladite méthode de plongement lexical au contexte textuel modifié en un deuxième vecteur de contexte et calcul d'une distance entre le vecteur de requête et ledit deuxième vecteur de contexte, la séquence de modification étant déterminée par un module (38) de détermination de la séquence de modification, en fonction d'un objectif de distance entre le vecteur de requête et le deuxième vecteur de contexte,
- un module de mémorisation (40) du contexte textuel modifié dans une base de contextes modifiés et du deuxième vecteur de contexte associé dans la base de vecteurs.

12. Dispositif d'utilisation d'un modèle d'intelligence artificielle générative augmenté par récupération modifié par un dispositif de modification conforme à la revendication 11, le dispositif comportant par un processeur configuré pour mettre en oeuvre :
- un module (80) d'acquisition d'une requête utilisateur sous forme d'une chaîne de caractères, et transformation par une méthode de plongement lexical de la requête utilisateur en un vecteur de requête utilisateur,
- un module (82) de sélection, dans la base de vecteurs, d'un vecteur de contexte le plus proche du vecteur de requête utilisateur, dit vecteur de contexte sélectionné,
- un module (84) d'extraction d'un contexte textuel associé au vecteur de contexte sélectionné, dit contexte textuel sélectionné, et, si ledit contexte textuel sélectionné appartient à la base de contextes modifiés, un module de filtrage (86) du contexte textuel sélectionné pour obtenir le contexte textuel initial correspondant,
- un module (88) d'augmentation de la requête utilisateur par le contexte textuel initial correspondant pour obtenir une requête augmentée,
- un module (90) d'application du modèle d'intelligence artificielle générative avec ladite requête augmentée pour obtenir une réponse à ladite requête utilisateur.
